# FASCICULE DE BREVET EUROPEEN

(11) **EP 0 365 939 B1**
(45) Date de publication et mention de la délivrance du brevet: **16.03.1994**
(21) Numéro de dépôt: 89119045.6
(22) Date de dépôt: 13.10.1989
(51) Int. Cl.: B60C 23/04

(54) **Antenne pour dispositif de surveillance de pneumatiques**
Antenne für eine Reifendrucküberwachungseinrichtung
Antenna for a tyre surveillance device

(30) Priorité: 24.10.1988 FR 8814295
(43) Date de publication de la demande: 02.05.1990
(73) Titulaire: COMPAGNIE GENERALE DES ETABLISSEMENTS MICHELIN - MICHELIN & CIE, 63040 Clermont-Ferrand Cédex (FR)
(72) Inventeur: Myatt, David, F-63100 Chateaugay (FR)
(74) Mandataire: Bauvir, Jacques

(56) Documents cités:
- EP-A- 0 165 640
- GB-A- 1 153 900
- US-A- 3 155 938
- US-A- 4 064 482
- US-A- 4 554 504
- US-A- 4 760 356

## Description

La présente invention concerne les dispositifs de surveillance des pneumatiques du type transpondeur, c'est-à- dire comprenant des modules de roue, un ensemble d'excitation et d'écoute sur véhicule, et des antennes de couplage entre ledit ensemble et chaque module de roue. Elle se rapporte en particulier à une antenne inductive utilisable pour une transmission des signaux par couplage inductif résonant, en particulier à une telle antenne utilisée comme antenne fixe, liée au châssis.

Le brevet US-A-4 737 761 montre comment il est possible de recueillir suffisamment d'énergie par un couplage inductif entre deux bobines, et comment il est possible de l'utiliser rationnellement. L'envoi d'énergie vers la roue se fait par couplage inductif entre une antenne liée à un point du véhicule non mobile en rotation, par exemple le porte roue ou un étrier de freins, et une antenne liée à la roue. On désignera ces antennes par "antenne fixe" et "antenne de roue" respectivement. De nombreuses variantes sont possibles pour la constitution et le positionnement de ces antennes. Le principe de base étant l'utilisation du couplage inductif, ces antennes comportent chacune au moins une bobine.

La bobine liée au châssis sert éventuellement à la fois à l'envoi d'énergie vers la roue, et à la réception d'un signal codé émis par la roue.

Pour transmettre l'énergie entre deux bobines, la bobine émettrice doit pouvoir engendrer un champ d'induction alternatif suffisant. Dans la pratique il s'avère que pour engendrer ce champ, il faut appliquer aux bornes de la bobine des tensions élevées non immédiatement disponibles. Il faut donc, soit adapter le nombre de spires de chacunes des bobines pour obtenir un rapport de transformation adéquat, soit ajouter un condensateur à la bobine émettrice pour obtenir un circuit résonant série, ou bien même adapter l'inductance de la bobine pour profiter judicieusement des capacités parasites qui peuvent parfois être importantes. A la résonance, la tension aux bornes de la bobine est égale à la tension d'alimentation multipliée par un coefficient de surtension.

Par convention, on appelle "antenne" un ensemble comprenant au moins la bobine émettrice ou réceptrice et la capacité créant un circuit résonant. En pratique, cette capacité est obtenue par ajout d'un condensateur, en série avec la bobine. Cependant, dans certaines implantations sur véhicule, il pourrait s'agir seulement de la capacité parasite du circuit. Le condensateur et la bobine sont très proches l'un de l'autre, situés dans le même boitier de protection mécanique, afin d'éviter de soumettre à des tensions élevées des lignes électriques longues.

La présente invention concerne une telle antenne, en particulier celle dite fixe et uniquement dans sa fonction de transmission d'énergie, son éventuel rôle en réception du signal n'étant ni concerné, ni affecté.

En réalité, il est fort difficile d'obtenir simplement les conditions de la résonance, à cause des dispersions de valeur de l'inductance de la bobine et de la capacité du condensateur, en raison également des dérives de ces mêmes valeurs, etc...

La tension aux bornes de la bobine décroît très rapidement au fur et à mesure que l'on s'éloigne des conditions optimales.

Il faut donc se fixer une plage maximale de variation de ces conditions, à l'intérieur de laquelle un champ d'induction suffisant est assuré.

Cette plage de fonctionnement correspond à une tolérance nécessaire sur la valeur de la fréquence de fonctionnement du circuit d'alimentation en énergie. Dans ce cas, plus la plage de fonctionnement est large, plus le facteur de qualité du circuit résonant devra être mauvais, sous peine d'avoir une amplification de tension bien trop importante si les conditions idéales de la résonance sont réunies. Cela oblige donc à introduire des résistances pour limiter le facteur de qualité ; il en résulte des dissipations d'énergie très importantes, nuisant à l'économie de fonctionnement, mais surtout pouvant provoquer des échauffements inacceptables pour l'implantation sur un véhicule, notamment de tourisme.

La solution selon l'invention consiste à introduire un amortissement non linéaire de la résonance. L'antenne selon l'invention, comportant une bobine formant inductance, et une capacité série et/ou parallèle, ladite capacité et ladite inductance formant un circuit résonant, est caractérisée en ce que l'antenne comporte des moyens pour écrêter le flux passant de ladite antenne à l'antenne couplée.

Les figures suivantes, et la description qui s'y rapportent, permettent de bien comprendre à la fois le problème qui se pose et la solution proposée par l'invention.
La figure 1A est un schéma d'ensemble d'un dispositif de surveillance des pneumatiques.
La figure 1B illustre une variante de réalisation.
Les figures 2A et 2B caractérisent chacune des deux antennes.
La figure 3 illustre le transfert d'énergie entre les bobines.

A la figure 1A, on voit une bobine 10 et un condensateur 12 faisant partie de l'antenne fixe 1, et une bobine 2 constituant l'antenne de roue. Le module de roue 3 comporte les éléments nécessaires au stockage de l'énergie transmise, et à son utilisation ainsi qu'un étage de codage des signaux émis. De préférence, on conçoit ce module de roue selon les enseignements des brevets US-A-4 703 650 et US-A-4 737 761. Le module de roue comporte donc un ou plusieurs condensateurs formant réservoir d'énergie. Sur le véhicule, on implante un ensemble 4 d'excitation et d'écoute qui est relié à chaque antenne fixe 1 par une ligne électrique 41. Cet ensemble 4 comporte un générateur 42 produisant un signal à la fréquence choisie pour la transmission de puissance, à savoir dans cet exemple 83 kHz, puis un amplificateur de puissance 43. Un dispositif de pilotage sélectionne la ou les roues concernées par l'envoi d'énergie et assure également le branchement de la roue que l'on souhaite inspecter à un amplificateur de signaux bas niveau 45 afin de recueillir le signal codé émis par ladite roue.

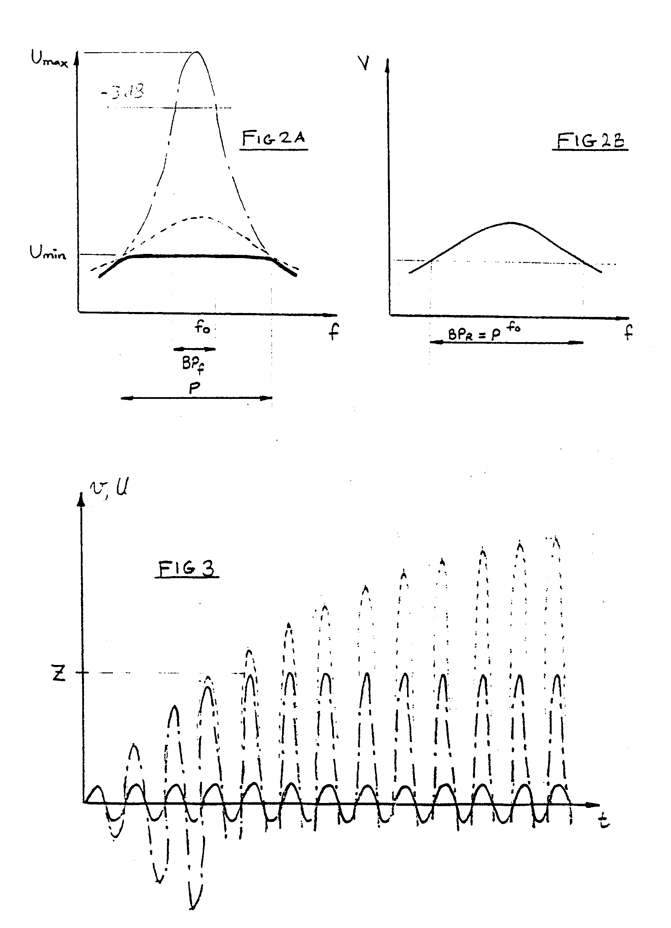

L'antenne fixe 1 comporte également un condensateur 12 pour créer un circuit résonant série. les figures 2A et 2B permettent de bien comprendre le fonctionnement de l'antenne fixe 1 et de l'antenne de roue 2 respectivement. Il est souhaitable que la tension V appliquée au module de roue 3 permette une bonne charge du ou des condensateurs formant réservoir d'énergie dans le module 3. De préférence, le temps de charge doit rester inférieur à 100 milli-secondes. L'antenne de roue 2 est dimensionnée et implantée sur la roue de telle sorte que, compte tenu des capacités parasites 23 permettant de rechercher une résonnance parallèle, la fréquence de résonance fₒ corresponde aux 83 kHz déjà cités. La roue elle-même est conductrice de l'électricité et se comporte comme une spire 21 en court-circuit, dont la résistance interne est figurée par la résistance 22.

Avant de poursuivre, notons que si la roue, ou plus précisément la jante sous laquelle l'antenne de roue 2 est accrochée n'est pas conductrice, ce qui à l'heure actuelle ne représente encore qu'une part infime des cas rencontrés dans les véhicules automobiles, on peut appliquer également à l'antenne de roue 2 l'enseignement exposé dans la présente description en relation avec l'antenne fixe 1. C'est la raison pour laquelle le mot "antenne" de la revendication 1 doit être compris de façon générique, comme désignant indifféremment l'antenne fixe ou l'antenne de roue.

La figure 2B représente la différence de potentiel recueillie aux bornes de la bobine 2 en fonction de la fréquence de fonctionnement. En pratique, le facteur de qualité d'un tel circuit résonant parallèle est mauvais, compte tenu essentiellement de l'amortissement dû à la jante. Donc la bande passante BPr est large, suffisamment large pour correspondre à une plage de fonctionnement dont l'étendue est dictée elle par des considérations industrielles : variations des valeurs pour la bobine 2, la capacité parasite 23, la résistance d'amortissement 22, la température de fonctionnement, etc...

L'antenne fixe 1, par contre, a intrinsèquement un facteur de qualité très élevé, schématisé par la courbe en traits d'axe à la figure 2A. Il en résulte une bande passante BPf très étroite, bien plus étroite que la plage de fonctionnement P imposée par des considérations industrielles de tolérances. Donc si l'on veille à ce que le niveau de la tension Uₘᵢₙ soit suffisant aux bords de la plage P, alors la tension Uₘₐₓ sera bien trop importante. C'est pourquoi, avant la présente invention, on introduisait une résistance en série avec le condensateur 12 et la bobine 10, ou en parallèle à l'un de ces éléments, pour dégrader suffisamment le facteur de qualité afin de retrouver une courbe caractéristique de tension U en fonction de la fréquence f (traits discontinus à la figure 2A) comparable à la courbe caractéristique de l'antenne de roue 2 (fig. 2B). Malheureusement, cette résistance dissipe de l'énergie qu'il faut par ailleurs fournir, d'où des échauffements inadmissibles, principalement au niveau des amplificateurs de puissance 43.

C'est pourquoi il est proposé d'ajouter un amortissement non linéaire, plutôt que de dégrader le facteur de qualité de l'antenne par des résistances. Dans ce but, on ajoute par exemple une branche 13 montée en parallèle de la bobine 10. Cette branche 13 peut être constituée par deux diodes Zéner montées en sens opposés, ou encore être constituée par une varistance, ou encore par des diodes à avalanche controlée, montées en sens opposés. D'un point de vue électrique, il est équivalent de monter ladite branche 13 en parallèle du condensateur 12 constituant la capacité du circuit résonant parce que la limitation de la tension aux bornes du condensateur 12 entraîne ipso facto la limitation de la tension U aux bornes de la bobine 10, par simple application des lois de Kirchoff pour la maille considérée. Ainsi, on conserve l'avantage d'un couplage inductif résonant avec un bon facteur de qualité, la limitation n'intervenant que pour la fraction de l'énergie apportée cycliquement, fraction qui devrait avoir pour conséquence normale d'élever la tension aux bornes de la bobine au delà du supportable. Autrement dit, à partir d'un certain niveau, on ne prend que la fraction d'énergie nécessaire pour maintenir la tension au seuil acquis, et on dissipe le solde d'énergie dans la branche 13.

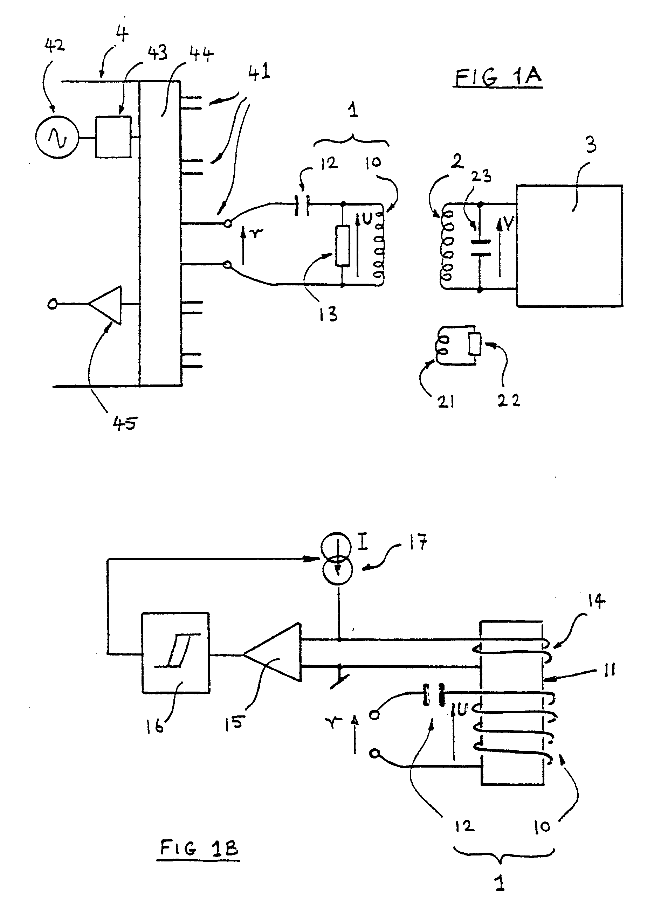

La figure 1B montre une variante de limitation où l'on agit directement sur le flux circulant dans le circuit magnétique. On aperçoit l'antenne 1 comportant une bobine 10 et un condensateur 12. On voit également un noyau 11 constitué par une ferrite magnétique. Une bobine de contrôle 14 embrasse le flux engendré par la bobine 10. La tension aux bornes de la bobine 14 est amplifiée (15) puis suivie par un élément à seuil 16 qui, au-delà de la limite choisie, commande une source de courant 17 qui, par l'envoi d'un courant continu permanent, polarise le noyau magnétique pour déplacer le point de fonctionnement vers la zone de saturation, afin que le phénomène de résonance reste limité à une valeur prédéterminée, conditionnant le choix de l'élément à seuil 16. On obtient ainsi également une limitation de l'énergie envoyée par la bobine émettrice 10. On peut aussi envisager de limiter le flux par le biais d'une ferrite saturable constituant le noyau 11.

La figure 3 rassemble différents chronogrammes qui montrent, en traits continus, le signal d'excitation v appliqué aux bornes de l'antenne fixe 1, puis en traits discontinus, l'allure de la tension U aux bornes de la bobine pour un circuit résonant non amorti, et en traits d'axe l'allure de la tension U pour un circuit comportant la branche 13. On remarque que, contrairement à un amortissement classique basé sur des résistances, on ne dissipe que l'apport supplémentaire d'énergie, proportionnellement à la fraction de tension dépassant le niveau marqué Z sur la figure 3, ce qui reste bien plus faible même lorsque l'on se trouve dans le palier de tension où les diodes Zéner deviennent fugitivement conductrices.

Une telle limitation non linéaire de l'antenne est également envisageable pour une antenne utilisant le couplage capacitif. On peut d'ailleurs noter, même avec des antennes en forme de bobine, une part -bien sûr très faible- de couplage capacitif entre les bobines, le fil conducteur jouant alors le rôle d'armature de condensateur. Dans ce cas, pour un dispositif de surveillance des pneumatiques utilisant la transmission par couplage capacitif entre une antenne solidaire de la roue et une antenne solidaire du support de roue, l'antenne comporte une armature de condensateur à partir de laquelle rayonne un champ électrique, comporte en outre une bobine d'inductance donnée et un condensateur de capacité donnée, et elle est caractérisée en ce que elle comporte des moyens pour écrêter le champ électrique rayonnant à partir de l'armature du condensateur. Ces moyens sont choisis et disposés tout comme exposé ci-dessus.

## Revendications

1. Antenne pour un dispositif de surveillance des pneumatiques utilisant la transmission par couplage inductif entre deux antennes couplées, ladite antenne comportant une bobine (10) formant inductance, et une capacité série et/ou parallèle, ladite capacité et ladite inductance formant un circuit résonant, caractérisée en ce que l' antenne comporte des moyens pour écrêter le flux passant de ladite antenne à l'antenne couplée.

2. Antenne selon la revendication 1, caractérisée en ce que lesdits moyens sont constitués par une branche (13) montée en parallèle de la bobine (10) ou de la capacité, ladite branche comportant deux diodes Zéner montées en série et en sens opposés.

3. Antenne selon la revendication 1, caractérisée en ce que lesdits moyens sont constitués par une branche (13) montée en parallèle de la bobine (10) ou de la capacité, ladite branche comportant une varistance.

4. Antenne selon la revendication 1, caractérisée en ce que lesdits moyens sont constitués par une branche (13) montée en parallèle de la bobine (10) ou de la capacité, ladite branche comportant une diode à avalanche contrôlée.

5. Antenne selon la revendication 1, caractérisée en ce que lesdits moyens sont constitués par un circuit magnétique comportant une ferrite saturable.

6. Antenne selon la revendication 1, caractérisée en ce que lesdits moyens comportent une bobine de contrôle (14) du flux circulant dans le circuit magnétique de ladite antenne.

7. Antenne pour un dispositif de surveillance des pneumatiques utilisant la transmission par couplage capacitif entre une antenne solidaire de la roue et une antenne solidaire du support de roue, ladite antenne comportant une armature de condensateur à partir de laquelle rayonne un champ électrique, ladite antenne comportant en outre une bobine d'inductance donnée et un condensateur de capacité donnée, ladite capacité du condensateur et ladite inductance formant un circuit résonant, caractérisée en ce que l'antenne comporte des moyens pour écrêter le champ électrique rayonnant à partir de l'armature du condensateur.

8. Antenne selon la revendication 7, caractérisée en ce que lesdits moyens sont constitués par une branche montée en parallèle de la bobine ou du condensateur, ladite branche comportant deux diodes Zéner montées en série et en sens opposés.

9. Antenne selon la revendication 7, caractérisée en ce que lesdits moyens sont constitués par une branche montée en parallèle de la bobine ou de la capacité, ladite branche comportant une varistance.

10. Antenne selon la revendication 7, caractérisée en ce que lesdits moyens sont constitués par une branche montée en parallèle de la bobine ou de la capacité, ladite branche comportant une diode à avalanche contrôlée.

## Claims

1. Antenna for a tire monitoring device which transmits by inductive coupling between two coupled antennas, said antenna comprising or coil (10) forming an inductance, and a capacitance connected in serie or parallel, the capacitance and said inductance forming a resonant circuit, characterized by fact that the antenna comprises means to clip the flux passing from said antenna to said second antenna.

2. Antenna according to Claim 1, characterized by fact that said means to clip comprises a branch (13) connected in parallel with said coil (10) or said capacitance, said branch comprising two Zener diodes connected in series and in opposite directions.

3. Antenna according to Claim 1, characterized by fact that said means to clip comprises a branch (13) connected in parallel with said coil (10) or said capacitance, said branch comprising a varistor.

4. Antenna according to Claim 1, characterized by fact that said means to clip comprises a branch (13) connected in parallel with said coil (10) or said capacitance, said branch comprising a controlled avalanche diode.

5. Antenna according to Claim 1, characterized by fact that said means to clip comprises a magnetic circuit comprising a saturatable ferrite.

6. Antenna according to Claim 1, wherein said means to clip comprises a coil (4) for control of the flux circulating in the magnetic circuit of said antenna.

7. Antenna for tire monitoring device which transmits by capacitive coupling between an antenna integral with the wheel and another of said antenna integral with the wheel support, said antenna comprising a capacitor plate from which an electric field radiates, and said antenna also comprising a coil of given inductance, and a capacitor of given capacitance, said capacitance of the capacitor and said inductance forming a resonant circuit characterized by the fact that the antenna comprises means to clip the electric field radiating from the capacitor plate.

8. Antenna according to Claim 7, characterized by the fact that said means to clip comprises a branch connected in parallel with the coil or the capacitor, said branch comprising two Zener diodes connected in series and in opposite directions.

9. Antenna according to Claim 7, characterized by the fact that said means to clip comprises a branch connected in parallel with the coil or the capacitor, said branch comprising a varistor.

10. Antenna according to Claim 7, characterized by the fact that said means to clip comprises a branch connected in parallel with the coil, said branch comprising a controlled avalanche diode.

## Patentansprüche

1. Antenne für eine Vorrichtung zur Reifenüberwachung unter Verwendung der Übertragung durch induktive Kopplung zwischen zwei gekoppelten Antennen, welche Antenne eine Spule (10) zur Bildung einer Induktivität und eine in Reihe und/oder parallel angeschlossene Kapazität aufweist, wobei Kapazität und Induktivität eine Resonanzschaltung bilden,
**gekennzeichnet durch**
Mittel zum Abschneiden der Impulsspitzen des von der Antenne zur angekoppelten Antenne übergehenden Flusses.

2. Antenne nach Anspruch 1,
dadurch gekennzeichnet,
daß die Mittel aus einer parallel zur Spule (10) oder zur Kapazität angeschlossenen Verzweigung (13) bestehen, die zwei in Reihe und in entgegengesetzter Orientierung montierte Zenerdioden aufweist.

3. Antenne nach Anspruch 1,
dadurch gekennzeichnet,
daß die Mittel aus einer parallel zur Spule (10) oder zur Kapazität montierten Verzweigung (13) bestehen, die einen Varistor aufweist.

4. Antenne nach Anspruch 1,
dadurch gekennzeichnet,
daß die Mittel aus einer parallel zur Spule (10) oder zur Kapazität montierten Verzweigung (13) bestehen, die eine Lawinendiode mit eingeschränktem Durchbruchsbereich aufweist.

5. Antenne nach Anspruch 1,
dadurch gekennzeichnet,
daß die Einrichtungen aus einem Magnetkreis mit einem sättigbaren Ferrit bestehen.

6. Antenne nach Anspruch 1,
dadurch gekennzeichnet,
daß die Mittel eine Regelspule (14) zum Regeln des im Magnetkreis der Antenne umlaufenden Flusses umfassen.

7. Antenne für Vorrichtung zur Reifenüberwachung unter Verwendung von kapazitiver Kopplung zwischen einer mit dem Rad verbundenen Antenne und einer mit dem Radträger verbundenen Antenne, welche Antenne eine Kondensatorplatte, von der ein elektrisches Feld abgestrahlt wird, eine Spule mit gegebener Induktivität und einen Kondensator mit gegebener Kapazität aufweist, wobei die Kapazität des Kondensators und die Induktivität eine Resonanzschaltung bilden,
**dadurch gekennzeichnet,**
daß die Antenne Mittel zum Abschneiden der Impulsspitzen des von der Kondensatorplatte abgestrahlten elektrischen Feldes aufweist.

8. Antenne nach Anspruch 7,
dadurch gekennzeichnet,
daß die Mittel aus einer parallel zur Spule oder zum Kondensator montierten Verzweigung bestehen, die zwei in Reihe und in entgegengesetzter Orientierung montierte Zenerdioden aufweist.

9. Antenne nach Anspruch 7,
dadurch gekennzeichnet,
daß die Mittel aus einer parallel zur Spule oder zur Kapazität montierten Verzweigung bestehen, die einen Varistor aufweist.

10. Antenne nach Anspruch 1,
dadurch gekennzeichnet,
daß die Mittel aus einer parallel zur Spule oder zur Kapazität montierten Verzweigung bestehen, die eine Lawinendiode mit eingeschränktem Durchbruchsbereich aufweist.
